# DEMANDE DE BREVET EUROPEEN

(11) **EP 1 073 299 A1**
(43) Date de publication de la demande: **31.01.2001**
(21) Numéro de dépôt: 00202571.6
(22) Date de dépôt: 18.07.2000
(51) Int. Cl.: H04Q 7/38

(54) **Dispositif de sélection d'un canal**

(30) Priorité: 27.07.1999 FR 9909734
(71) Demandeur: Koninklijke Philips Electronics N.V., 5621 BA Eindhoven (NL)
(72) Inventeur: Taverdet, Agnès, 75008 Paris (FR)
(74) Mandataire: Chaffraix, Jean

(57) **Abrégé**

La présente invention concerne un système de communication comportant un poste de base (B) et un ou plusieurs radiotéléphones portatifs (H). Chaque radiotéléphone portatif (H) comporte un moyen (M1) d'établir une première liste (L1) de canaux relative à l'environnement du radiotéléphone portatif.

Le poste de base (B) comporte également un moyen (M21) d'établir une deuxième liste (L21) de canaux relative à l'environnement du poste de base.

Chaque radiotéléphone portatif (H) comporte alors un moyen (M22) d'établir une troisième liste (L22) de canaux à partir de la deuxième liste (L21) qui lui est envoyée par le poste de base (B) via au moins un message (M).

Chaque radiotéléphone portatif (H) comporte enfin un moyen (M3) lui permettant de sélectionner un canal (CH), à partir des première (L1) et troisième (L22) listes de canaux.

Application: Téléphonie numérique

## Description

La présente invention concerne un radiotéléphone portatif comportant un moyen d'établir une première liste de canaux.

La présente invention concerne également une méthode de sélection d'un canal utilisant une première liste comprenant des canaux et des valeurs de puissance associées aux canaux et mesurées dans l'environnement du radiotéléphone portatif et une deuxième liste comprenant les canaux et des valeurs de puissance associées aux canaux et mesurées dans l'environnement d'un poste de base.

La présente invention concerne enfin un système de communication comportant un poste de base et au moins un radiotéléphone portatif, le radiotéléphone portatif comportant un moyen d'établir une première liste de canaux et le poste de base comportant un moyen d'établir une deuxième liste de canaux.

De tels systèmes de communication sont couramment employés, entre autres applications possibles, en téléphonie numérique de type DECT.

La demande de brevet français 93/01241 décrit un tel système de communication, comprenant un radiotéléphone portatif et un poste de base sans cordon. Le radiotéléphone portatif et le poste de base sans cordon classent en catégories les canaux disponibles dans leur propre liste de priorité, du meilleur au pire. La liste de priorité du poste de base sans cordon et celle du radiotéléphone portatif sont combinées dans le poste de base sans cordon de manière à former une liste de priorité générale. La liste de priorité générale est utilisée par le système téléphonique sans cordon pour attribuer un canal libre à utiliser. Chaque canal disponible se voit attribuer la priorité la plus basse qui a été choisie dans chaque liste particulière pour former la liste de priorité générale.

Ce système de communication présente un certain nombre d'inconvénients.

Tout d'abord, la constitution de la liste de priorité générale par le poste de base nécessite que la communication soit préalablement établie afin de transférer la liste de priorité du radiotéléphone portatif vers le poste de base. Or, c'est le radiotéléphone portatif qui établit la communication dans un système de communication de type DECT. Dans ces conditions, des données peuvent être perdues lors de l'établissement de la communication si le canal initialement sélectionné par le poste de base est un canal bruité pour le radiotéléphone portatif.

De plus, d'un point de vue plus général, le radiotéléphone portatif d'un tel système de communication présente une autonomie relativement faible notamment en raison des transferts de données du radiotéléphone portatif vers le poste de base. En effet, la transmission radioélectrique est coûteuse du point de vue de la consommation électrique pour le radiotéléphone portatif.

Enfin, la gestion de plusieurs radiotéléphones portatifs par un seul poste de base serait complexe dans un tel système de communication.

L'invention a pour but de remédier dans une large mesure à ces inconvénients, en proposant un système de communication autorisant une meilleure qualité de réception du radiotéléphone portatif ainsi qu'une augmentation de l'autonomie de ce même dispositif.

A cet effet, la présente invention propose un système de communication caractérisé en ce que ledit radiotéléphone portatif comprend :
- un moyen d'établir une troisième liste de canaux à partir de la deuxième liste qui lui est envoyée par le poste de base via au moins un message,
- un moyen de sélection d'un canal à partir des première et troisième listes de canaux.

Un tel système de communication permet de lancer la procédure de sélection d'un canal dès la synchronisation du radiotéléphone portatif avec le poste de base, assurant ainsi une meilleure qualité de réception du radiotéléphone portatif lors de l'établissement de la communication. De plus, le transfert des données s'effectue du poste de base vers le radiotéléphone portatif : le radiotéléphone portatif fonctionne ainsi uniquement en réception, ce qui réduit sa consommation et lui confère une plus grande autonomie.

La présente invention propose également une méthode de sélection d'un canal caractérisée en ce qu'elle comprend une étape de scrutation des canaux destinée à présélectionner un canal dont la valeur de puissance dans une liste primaire est inférieure à un seuil, suivie d'une étape de test du canal présélectionné destinée à sélectionner ledit canal si sa valeur de puissance dans une liste secondaire est inférieure à un seuil et possède une date valide, les deux étapes étant réitérées jusqu'à la sélection d'un canal.

Un canal bruité, soit pour le poste de base, soit pour le radiotéléphone portatif, ne pourra donc être sélectionné, autorisant ainsi une meilleure qualité de réception du radiotéléphone portatif et permettant d'établir plus rapidement une liaison radioélectrique, les cas d'échecs lors de l'établissement d'une communication étant éliminés.

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés dans lesquels :
- la figure 1 est une représentation schématique du système de communication selon l'invention,
- la figure 2 est une représentation schématique d'une trame TDMA utilisée dans un système de communication de type DECT,
- la figure 3 est une représentation schématique d'un message de type ESCAPE page tel que défini par la norme DECT,
- la figure 4 est un organigramme représentant la méthode de sélection d'un canal.

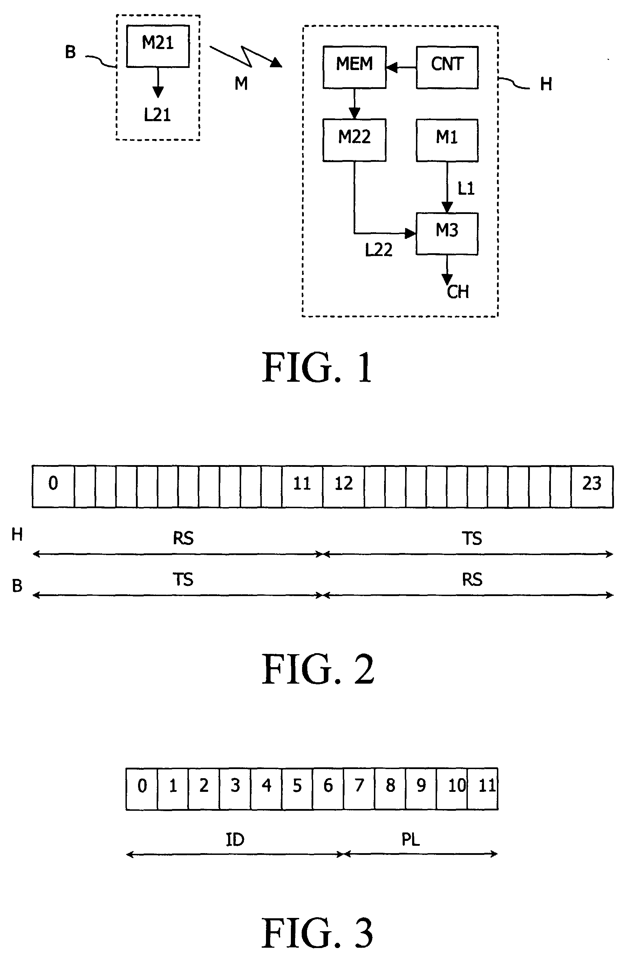

La figure 1 représente schématiquement un système de communication selon l'invention. Dans le mode de réalisation préféré, le système de communication est, à titre d'exemple, de type DECT mais peut également être n'importe quel autre système de communication synchrone.

Le système de communication selon l'invention comporte un poste de base (B) et un ou plusieurs radiotéléphones portatifs (H). Chaque radiotéléphone portatif (H) comporte un moyen (M1) d'établir une première liste (L1) comprenant des canaux et des valeurs associées à ces canaux. Dans le mode de réalisation préféré, ces valeurs sont des valeurs de puissance RSSI (de l'anglais Received Signal Strength Indicator) mesurées dans l'environnement du radiotéléphone portatif, la puissance RSSI étant une donnée essentielle en téléphonie numérique de type DECT. D'autres mesures sont susceptibles d'être associées aux canaux comme, par exemple, la valeur d'un SNR, c'est à dire d'un rapport signal à bruit.

Le poste de base (B) comporte également un moyen (M21) d'établir une deuxième liste (L21) comprenant lesdits canaux et des valeurs de puissance RSSI associées à ces canaux et mesurées dans l'environnement du poste de base.

A des intervalles de temps appropriés, le poste de base (B) envoie un message (M) au radiotéléphone portatif (H). Ledit message contient l'identification d'un canal et la valeur de puissance qui lui est associée. Quand le radiotéléphone portatif reçoit ce message, il le stocke dans une mémoire (MEM). Le radiotéléphone portatif stocke également la date à laquelle le message a été reçu. Pour cela il utilise, dans le mode de réalisation préféré, l'information délivrée par le compteur de multitrames (CNT), une multitrame étant égale à 16 trames soit 160 ms dans la norme DECT.

Chaque radiotéléphone portatif (H) comporte alors un moyen (M22) d'établir, à partir des messages envoyés successivement par le poste de base, une troisième liste (L22) comprenant les canaux, des valeurs de puissance associées aux canaux et mesurées dans l'environnement du poste de base et la date de réception de la valeur de puissance.

Chaque radiotéléphone portatif (H) comporte enfin un moyen (M3) lui permettant de sélectionner un canal de fréquence (CH) à partir des première (L1) et troisième (L22) listes de canaux.

Le système DECT utilise des trames TDMA dont une représentation schématique est donnée figure 2. La trame TDMA contient 24 divisions, appelées également slots, numérotées de 0 à 23. La durée de cette trame est de 10 ms et un slot est constitué de 480 bits. Dans le mode de réalisation préféré, le système de communication utilise 10 fréquences différentes. Concernant le radiotéléphone portatif (H), les slots numérotés de 0 à 11 sont utilisés pour la réception (RS), tandis que les slots numérotés de 12 à 23 sont utilisés pour l'émission (TS). A l'inverse, les slots numérotés de 0 à 11 sont utilisés pour l'émission (TS), tandis que les slots numérotés de 12 à 23 sont utilisés pour la réception (RS) en ce qui concerne le poste de base (B). Le système de communication selon l'invention dispose ainsi de 240 canaux soit encore 120 paires de canaux, une paire de canaux étant constituée d'un canal d'émission et d'un canal de réception.

Dans le mode de réalisation préféré, le message (M) utilisé est de type ESCAPE page. Un tel message a été défini pour les applications propriétaires de la norme DECT. La figure 3 décrit ce message. Il est constitué de 12 bits :
- les 7 premiers bits sont utilisés pour identifier le numéro de la paire de canaux (ID) qui peut aller de 0 à 119 dans le mode de réalisation préféré,
- les 5 autres bits sont utilisés pour transmettre la valeur de puissance RSSI (PL).

En fait, les valeurs de puissance (PL) transmises sont des valeurs relatives égales, dans le mode de réalisation préféré, à la différence entre la valeur de puissance la plus élevée de la paire de canaux (celle du slot de réception ou celle du slot d'émission) et la valeur de puissance la plus faible de la deuxième liste de canaux (L21). Ainsi, ces valeurs de puissance sont codées sur un nombre minimal de bits.

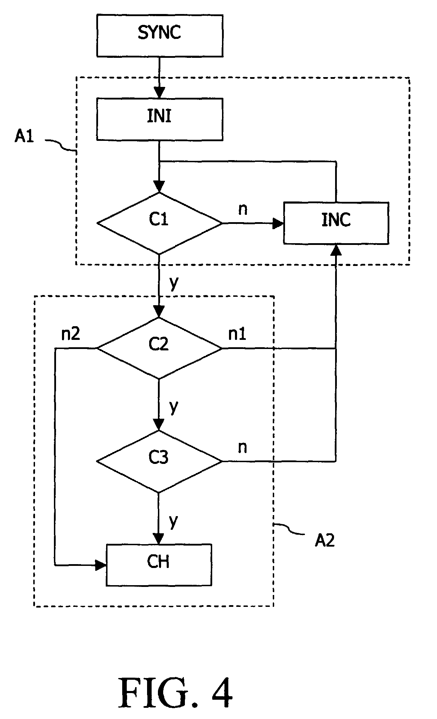

La figure 4 donne un organigramme représentant la méthode de sélection d'un canal selon l'invention.

La méthode commence par une première étape de synchronisation (SYNC) entre le poste de base (B) et le radiotéléphone portatif (H). Pour cela, le poste de base (B) scrute, à des intervalles de temps appropriés, l'ensemble des canaux. Le poste de base (B) choisit la paire de canaux la plus silencieuse pour lui, correspondant à la valeur de puissance RSSI la plus basse, ceci afin d'envoyer un signal de référence sur chaque trame pour ladite paire de canaux. Le radiotéléphone portatif (H) utilise ce signal de référence afin de se synchroniser avec le poste de base (B).

Une fois l'étape de synchronisation effectuée, une première étape de scrutation (A1) des canaux est effectuée. Cette étape de scrutation comprend :
- une sous-étape d'initialisation (INI) qui détermine le premier canal à tester,
- un premier test (C1) qui est effectué sur la valeur de puissance des canaux de la première liste (L1): si un canal silencieux, c'est à dire si un canal associé à une valeur de puissance RSSI de la première liste (L1) inférieure à un seuil suffisamment faible pour assurer une bonne qualité de communication a été trouvé (y), l'algorithme continue vers une deuxième étape,
- dans le cas contraire (n), une sous-étape de chargement d'un nouveau canal (INC) qui est de nouveau testé (C1), ces deux dernières opérations étant répétées jusqu'à la présélection d'un canal silencieux pour le radiotéléphone portatif.

La scrutation se fait selon l'ordre croissant des numéros des canaux mais peut également se faire selon les valeurs croissantes de puissance RSSI ou à partir de tout autre méthode de tri des canaux.

La méthode comprend alors une deuxième étape de test (A2) du canal présélectionné. Cette étape comporte deux tests :
- un second test (C2) est effectué sur la validité de la date de la valeur de puissance du canal dans la troisième liste (L22) : si cette valeur de puissance n'a pas été envoyée dans un délai donné (n1), dans les 30 dernières secondes par exemple, alors l'algorithme recommence à l'étape de scrutation (A1) en testant un nouveau canal (INC) ; si aucune date, donc aucune valeur de puissance, n'est associée au canal (n2), alors ce canal est choisi pour établir ou maintenir une communication (CH) et l'algorithme se termine ;
- dans un troisième cas (y), un troisième test (C3) est effectué sur la valeur de puissance du canal de la troisième liste (L22) : si un canal silencieux, c'est à dire si un canal associé à une valeur de puissance RSSI de la troisième liste (L22) inférieure à un seuil suffisamment faible pour assurer une bonne qualité de communication a été trouvé (y), alors ce canal est choisi pour établir ou maintenir une communication (CH), sinon (n) l'algorithme recommence à l'étape de scrutation (A1) en testant un nouveau canal (INC).

Les étapes de scrutation (A1) et de test (A2) sont réitérées jusqu'à la sélection d'un canal pour établir ou maintenir la communication (CH).

Avec un tel algorithme, on a ainsi l'assurance que, bien que l'environnement du poste de base soit différent de l'environnement du radiotéléphone portatif, il sera néanmoins possible d'utiliser un canal pour établir ou maintenir une communication qui ne sera bruitée ni pour le radiotéléphone portatif (H), ni pour le poste de base (B).

Le fait de tester la validité de la date de la valeur de puissance assure également l'interopérabilité du système de communication. En effet, si un poste de base (B) ne fonctionne pas selon l'invention, il n'enverra pas de message (M) comprenant des valeurs de puissance RSSI. La liste (L22) ne comportera alors ni la date, ni la valeur de puissance des canaux, mais le radiotéléphone portatif (H) pourra néanmoins sélectionner un canal à partir de la seule première liste (L1) de canaux. A l'inverse, un poste de base (B) fonctionnant selon l'invention délivrera des messages (M) qui ne seront pas pris en compte par le radiotéléphone portatif (H) s'il ne possède pas les moyens décrits dans l'invention, mais le radiotéléphone portatif (H) pourra néanmoins sélectionner un canal selon sa propre méthode.

## Revendications

1. Système de communication comportant un poste de base (B) et au moins un radiotéléphone portatif (H), le radiotéléphone portatif (H) comportant un moyen (M1) d'établir une première liste (L1) de canaux et le poste de base (B) comportant un moyen (M21) d'établir une deuxième liste (L21) de canaux, caractérisé en ce que ledit radiotéléphone portatif comprend :
- un moyen (M22) d'établir une troisième liste (L22) de canaux à partir de la deuxième liste (L21) qui lui est envoyée par le poste de base via au moins un message (M),
- un moyen (M3) de sélectionner un canal à partir des première (L1) et troisième (122) listes de canaux.

2. Système de communication selon la revendication 1, caractérisé en ce que le message (M) utilisé est un mot numérique de type ESCAPE page tel que défini par la norme DECT.

3. Système de communication selon la revendication 1, caractérisé en ce que le radiotéléphone portatif comprend un compteur (CNT) destiné à attribuer une date au message ainsi qu'une mémoire (MEM) destiné à stocker ladite date.

4. Système de communication selon la revendication 1, caractérisé en ce que le moyen (M3) de sélectionner un canal comprend un moyen de scrutation des canaux destiné à présélectionner un canal auquel est associé une valeur de puissance inférieure à un seuil dans la première liste (L1), suivi d'un moyen de test du canal présélectionné destiné à sélectionner ledit canal si une valeur de puissance qui lui est associée dans la troisième liste (L22) est inférieure à un seuil et possède une date valide, les deux moyens étant utilisés de façon itérative jusqu'à la sélection d'un canal.

5. Radiotéléphone portatif comportant un moyen (M1) d'établir une première liste (L1) de canaux, caractérisé en ce qu'il comprend :
- un moyen (M22) d'établir, à partir d'une deuxième liste (L21) de canaux relative à l'environnement d'un poste de base (B) et qui lui est envoyée par ledit poste de base (B) via au moins un message (M), une troisième liste (L22) de canaux,
- un moyen (M3) de sélectionner un canal à partir des première (L1) et troisième (122) listes de canaux.

6. Radiotéléphone portatif selon la revendication 5, caractérisé en ce que le message (M) utilisé est un mot numérique de type ESCAPE page tel que défini par la norme DECT.

7. Radiotéléphone portatif selon la revendication 5, caractérisé en ce qu'il comprend un compteur (CNT) destiné à attribuer une date au message ainsi qu'une mémoire (MEM) destiné à stocker ladite date.

8. Radiotéléphone portatif selon la revendication 5, caractérisé en ce que le moyen (M3) de sélectionner un canal comprend un moyen de scrutation des canaux destiné à présélectionner un canal associé à une valeur de puissance inférieure à un seuil dans la première liste (L1), suivi d'un moyen de test du canal présélectionné destiné à sélectionner ledit canal si une valeur de puissance qui lui est associée dans la troisième liste (L22) est inférieure à un seuil et possède une date valide, les deux moyens étant utilisés de façon itérative jusqu'à la sélection d'un canal.

9. Méthode de sélection d'un canal utilisant une liste primaire comprenant des canaux et des valeurs de puissance associées aux canaux et mesurées dans l'environnement du radiotéléphone portatif et une liste secondaire comprenant les canaux et des valeurs de puissance associées aux canaux et mesurées dans l'environnement du poste de base, caractérisée en ce que ladite méthode comprend une étape de scrutation des canaux destinée à présélectionner un canal dont la valeur de puissance dans la liste primaire est inférieure à un seuil, suivie d'une étape de test du canal présélectionné destinée à sélectionner ledit canal si sa valeur de puissance dans la liste secondaire est inférieure à un seuil et possède une date valide, les deux étapes étant réitérées jusqu'à la sélection d'un canal.

10. Support de programme d'ordinateur pour radiotéléphone portatif, ledit programme d'ordinateur comprenant une suite d'instructions qui, lorsqu'elles sont chargées dans le radiotéléphone portatif, permettent audit radiotéléphone portatif d'exécuter la méthode de sélection d'un canal selon la revendication 9.
